# EUROPEAN PATENT SPECIFICATION

(11) **EP 1 761 088 B1**
(45) Date of publication and mention of the grant of the patent: **13.01.2010**
(21) Application number: 05291820.8
(22) Date of filing: 01.09.2005
(51) Int. Cl.: H04W 8/20

(54) **Customisation of mobile stations**
Personalisierung von Mobilstationen
Personnalisation de stations mobiles

(43) Date of publication of application: 07.03.2007
(73) Proprietor: FRANCE TELECOM, 75015 Paris (FR)
(72) Inventor: Mora, Eric Gilles Orange S.A., London WIU 7DZ (GB); Maitre, Yves Orange S.A. Siège Social, 75505 Paris (FR)
(74) Representative: Thiel, Frédéric

(56) References cited:
- GB-A- 2 292 047
- US-A- 5 418 837
- US-A- 5 448 765
- US-B1- 6 484 024

## Description

### Field of the Invention

The present invention relates to the customisation of mobile stations, in particular such mobile stations for use in mobile communications networks. The invention also relates to mobile stations which are adapted for receiving such customisation and portable authentication modules for use with such mobile stations.

### Background of the Invention

A mobile communications network such as a GSM network typically supports a number of communications terminals, known as mobile stations, which are adapted for making use of at least some of the services offered by the mobile communications network, such as making and receiving telephone calls, and receiving and sending data.

Access to services provided by mobile communications networks is generally restricted, and users need to take out subscriptions to make use of the services. Authorised users, i.e. subscribers, need a means of authenticating themselves to the mobile communications network. In the case of GSM, UMTS and other types of networks, the subscribers receive for this purpose a portable authentication module which can be ported between different mobile stations. Examples of such portable identification authentication module include Subscriber identity modules ("SIMs" or "SIM cards"), Universal Subscriber identity modules ("USIMs" or "USIM cards") and Universal Integrated Circuit Cards ("UICCs" or "UICC cards").

The portable authentication module is generally provided to the subscriber by the network operator. In addition to providing an authentication function, it stores standard data records for use by the mobile station. Such standard data records include subscriber data records storing information such as a contacts directory, and telecommunications data records which store information such as network settings for the mobile station. On insertion into a mobile station, the mobile station is able to read the standard data records, store data copied from them in a working memory on the mobile station, and update some of the data records during usage of the mobile station.

As mentioned above, the portable authentication module can be ported between different mobile stations, and the subscriber is not generally restricted to the use of a particular mobile station. However, when a subscriber joins a network operator the subscriber generally also receives a mobile station provided by the network operator. Many mobile network operators provide non-standard features on the mobile stations which they provide to their subscriber. These features range from external decoration, for example a logo, to the entire physical design of the mobile station (many operators have one or more exclusive models which are only available via that operator.) Also, many operators offer customized services to provide a recognizable "signature" uniquely associated with the mobile operator. Such services can be provided through customising software applications installed on the mobile station.

These customising software applications are typically installed in a read-only memory of the mobile station by the manufacturer of the mobile station, on behalf of the mobile operator. This customisation during manufacture of the mobile station leads to additional cost, and a degree of inflexibility to the mobile operator in altering the selection of customising software applications on a mobile station. Further, if the subscriber changes mobile stations, the customization may be different or lost entirely, and this is inconvenient to the subscriber.

US-A-5418837, US-A-6311241 and US-A-6484024 described systems where customising software applications are transferred from a "software upgrading module (SUM) card", a "cargo card" or a "plug-in card" which is inserted into the same slot as a SIM card. A problem with these types of system is that the customization is dependent upon the subscriber performing an application loading operation, which is difficult to ensure. As a result, the desired customization often does not occur and the desired user experience is not obtained when the subscriber makes use of the services provided by the operator.

US-A-5448765 discloses a system including a radio telephone or the like, and a reading device in which a removable memory can be inserted containing the individual data of a radio subscriber and at least the system-specific control parameters of at least one radio telephone system. The removable memory contains essentially the entire software of the radio telephone including the control parameters, and the non-volatile program memory of the radio telephone contains only the loading routine for loading the software including the control parameters into the work memory when the radio telephone is switched on or the removable memory is inserted in the reading device. However, this system does not provide for a portable authentication module, such as a SIM card.

A further known way of customizing a mobile station is using a so-called SIM Toolkit application, which can be pre-installed or downloaded to a SIM. SIM Toolkit is a set of functions provided in a SIM which allows the SIM to control, amongst other things, the display on a mobile station. However, the range of functionality provided is relatively limited.

Java Card™ technology provides a secure environment for applications that run on smart cards and other devices, with very limited memory and professing capabilities. Multiple applications can be deployed on a single card, and new ones can be added to it even after it has been issued to the end user. Applications written in the Java™ programming language can be executed securely on cards from different vendors. Java SIM cards are now common; however, again, the range of functionality provided is also limited.

It is an object of the present invention to provide an improved and more convenient customisation of mobile stations.

### Summary of the Invention

In accordance with aspects of the invention there is provided a method of customising a mobile station in a mobile telecommunications system, as defined in claim 1, a mobile station as defined in claim 7, and a portable authentication module as defined in claim 9.

In this way, the customisation of a mobile station can be coordinated with a point in time when the mobile station is adapted to gain access to services from the mobile operator, namely when an appropriate portable authentication module is inserted into the mobile station and the authentication functions of the authentication module are made available to the mobile station.

Further, the action of removing the authentication module, which renders the mobile station incapable of gaining access to services from the mobile operator, also removes the customisation features provided by the customising software applications. Hence, the customisation of the mobile station and the adaptation of the mobile station for use with a particular network operator are more closely tied together. If a different authentication module is inserted, which belongs to the network of a different mobile operator, the customisation features provide by the previous operator are removed from the mobile station.

Note that a software application is different to the standard data records which are stored on a conventional authentication module. A software application includes program code which is designed to run on an applications platform, which is either an operating system, such as the Microsoft Windows Mobile™, Microsoft Windows CET™, Symbian™ and Linux™ operating systems, or a runtime environment, such as the Java™ and Brew™ applications platforms. Standard data records held in a conventional authentication module for retrieval by a mobile station, such as contacts information, etc. are not in the form of software applications.

In accordance with a preferred embodiment, the deactivation is conducted without removing said one or more customising software applications from said mobile station, and in response to reinsertion of said authentication module into said mobile station, reactivating said one or more customising software applications without retransferring entirely said one or more customising software applications from said authentication module.

In this way, when the portable authentication module is temporarily removed by the subscriber, and reinserted in the same mobile station, it is not necessary for the entire set of customising software applications to be transferred to the authentication module again; the reactivation of the customising software applications, and therefore the customisation of the mobile station, can be performed more quickly, thereby reducing delay to the subscriber when the authentication module is reinserted.

In one embodiment of the invention, the one or more customising software applications are designed to run on a single selected applications platform, such as one of the Microsoft Windows Mobile^{™}, Microsoft Windows CE^{™}, Symbian^{™} and Linux^{™} operating systems and the Java^{™} and Brew^{™} applications platforms. This provides an authentication module which provides automatic customisation when inserted into a mobile station having the selected applications platform.

In a further embodiment of the invention, the one or more customising software applications include one or more sets of software applications, each set including more than one version of software applications each providing a similar function, such as a home screen customisation function, a backup function, a game function or a software update function. Each different version in a set is designed to run on a different selected applications platform. This provides an authentication module which provides automatic customisation, which is similar in functionality in each case, when inserted either into a mobile station having one of the selected applications platforms or into a mobile station having a different one or the selected applications platforms. In this case, the selected applications platforms may include one or more of the Microsoft Windows Mobile^{™}, Microsoft Windows CE^{™}, Symbian^{™} and Linux^{™} operating systems, and/or one or both of the Java^{™} and Brew^{™} applications platforms.

The system may be embodied as functionality implemented in a mobile station such as a mobile telephone handset, and/or a portable authentication module such as a Subscriber identity module (SIM) or Universal Integrated Circuit Card (VICC).

Further aspects of the invention are set out in the appended claims, and further features and advantages of the invention will become apparent from the following description of preferred embodiments of the invention, given by way of example only, which is made with reference to the accompanying drawings.

### Brief Description of the Drawings

Figure 1 is a block diagram of a known mobile communications network in accordance with an embodiment of the invention;
Figure 2 is a block diagram of a mobile station according to an embodiment of the present invention;
Figure 3 is a schematic diagram showing data stored in a memory of a portable authentication module according to an embodiment of the present invention; and
Figure 4 is a flow diagram showing steps involved in the operation of the mobile station shown in Figure 2 according to an embodiment of the present invention.

### Detailed Description of the Invention

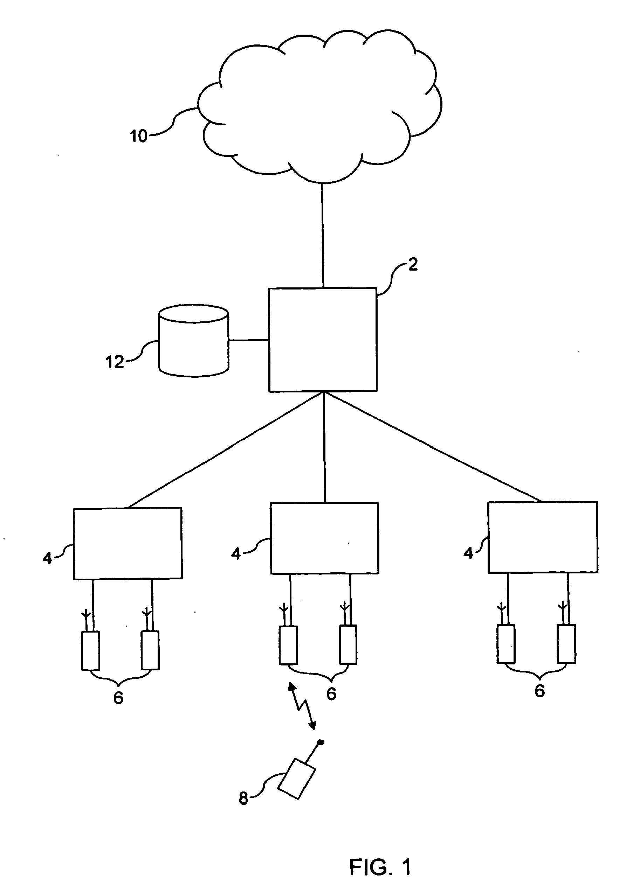

Before describing aspects of the embodiments in detail, a network environment within which embodiments are arranged to operate will be described with reference to Figure 1 which shows an exemplary mobile communications network in the form of a GSM network, referred to as a public land mobile network (PLMN). This is in itself known and will not be described in great detail. Also, it should be understood that the invention applies to other types of mobile communications networks, and is not limited to GSM networks.

In this embodiment, a mobile switching centre (MSC) 2 is connected via communication links to a number of base station controllers (BSCs) 4. The BSCs 4 are dispersed geographically across areas served by the mobile switching centre 2. Each BSC 4 controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". Cellular networks, such as a GSM network, are provided with a large number of such cells, which are ideally contiguous to provide continuous coverage over the whole network territory.

A mobile switching centre 2 is also connected via communications links to other mobile switching centres in the remainder of the mobile communications network 10, and to a public service telephone network (PSTN), which is not illustrated. The mobile switching centre 2 is provided with a home location register (HLR) 12 which is a database storing subscriber authentication data including, for each mobile station 8, a international mobile subscriber identity (IMSI) which is unique to the mobile station 8. Corresponding authentication data including the IMSI and encryption keys are also stored in the mobile station 8 in a portable authentication module, which is referred to herein further as a SIM although it should be understood that it could be a different type of portable authentication module, such as a USIM. The authentication data is stored in the SIM along with other standard data records and an authentication function for conducting authentication with respect to the mobile communications network 10.

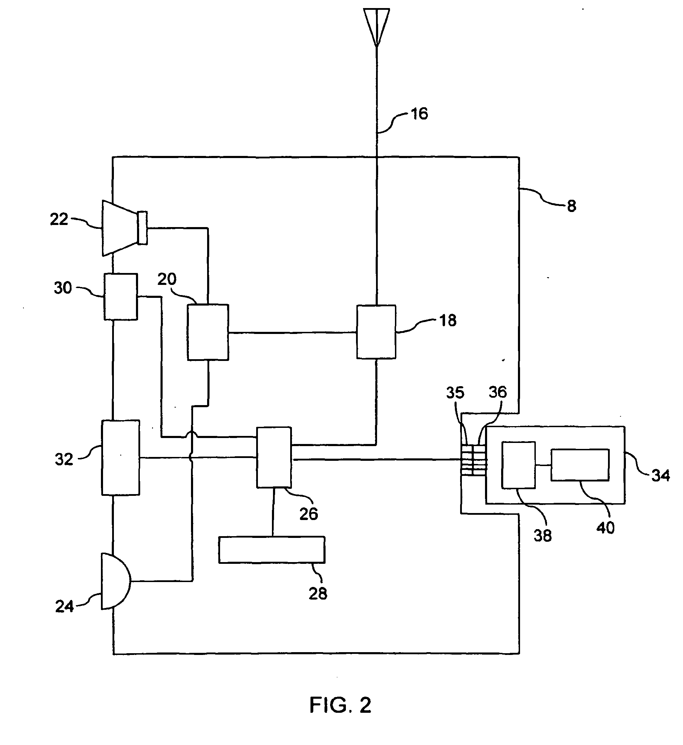

Figure 2 shows a mobile station 8 according to an embodiment of the invention. The mobile station 8 includes a transmit/receive aerial 16, a radio frequency transceiver 18, a speech coder/decoder 20 connected to a loudspeaker 22 and a microphone 24, a processor circuit 26 and a non-volatile memory 28, for example EEPROM or Flash memory, an LCD display 30 and a manual input port (keypad) 32. The mobile station 8 is connected to a SIM 34 via interconnecting sets of electrical contacts 35, 36. The SIM 34 and mobile station 8 preferably implement a high speed data transfer protocol, such as the Universal Serial Bus (USB) protocol, for the transfer of data at high data rates between the mobile station 8 and SIM 34.

The SIM 34 comprises a data processor 38 and a non-volatile memory 40, for example EEPROM or Flash memory, for storing data according to embodiments of the invention. The memory of the SIM 34 in this embodiment is preferably relatively large, and may for example have a size of 64Mb, 128Mb, or above.

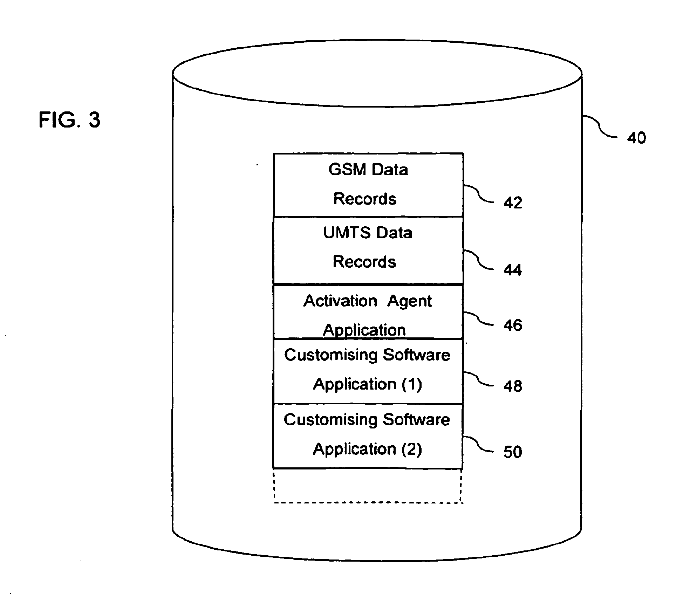

Figure 3 illustrates the contents of the memory 40 of the SIM 34 schematically. The memory 40 includes a set of standard data records for the mobile station 8. The example shown in Figure 3 includes two sets of standard data records, although only one set may be included. The first set of standard data records 42 are in this embodiment GSM data records, for use when the mobile station 8 is operating in a GSM mobile communications network. The second set of standard data records 44 are in this embodiment UMTS data records, for use when the mobile station 8 is operating in a UMTS mobile communications network. These standard data records 42, 44 consist of settings for the mobile station 8 and subscriber data, such a contacts data, which are used by the mobile station 8 to adapt the mobile station for use by the subscriber in the mobile communications network(s) to which the subscriber has access.

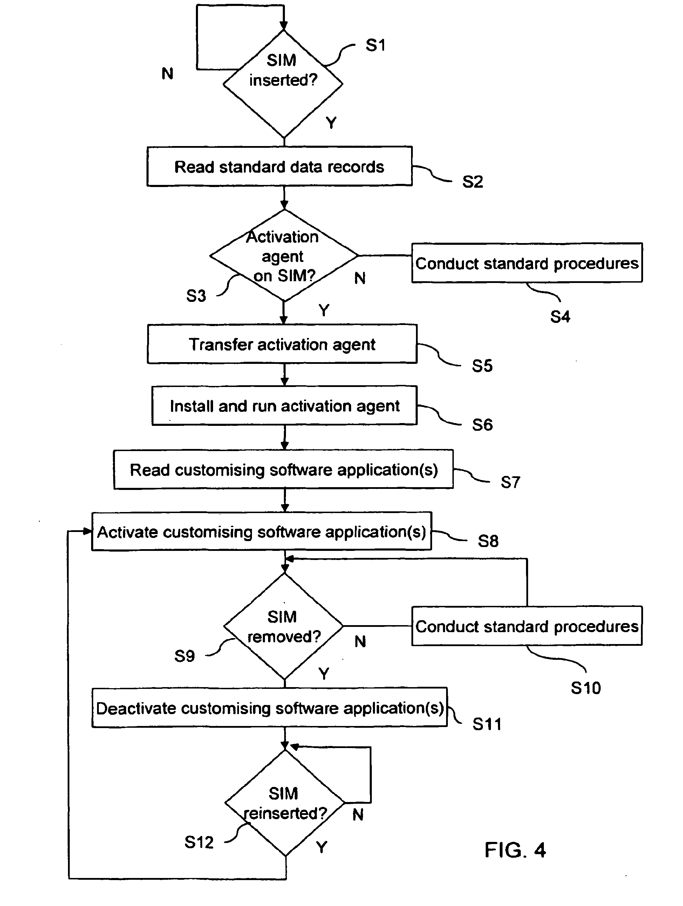

Also included in the memory 40, according to an embodiment of the invention, are a plurality of software applications for transfer and activation on the mobile station 8. The software applications include an activation agent 46 and one or more customising software applications. In this example, two customising software applications 48, 50 are provided, however it should be understood that any number may in practice be provided, depending on the amount of memory available in the SIM 34. The activation agent 46 is preferably stored in a predetermined location within the memory 40. Such a predetermined location may include a predetermined directory and/or a predetermined file name. The mobile station 8 is adapted according to an embodiment of the invention to have specific routines, which may be included within the operating system or other application platform of the mobile station 8, which are followed automatically on insertion of a SIM 34 into the mobile station 8, to detect the presence of an activation agent 46 within the memory 40, by searching for an activation agent 46 within the predetermined directory or with the predetermined file name mentioned above. Hence, the mobile station 8 can automatically detect and install the activation agent 46 in response to insertion of the SIM 34 within the mobile station 8. The procedure is described below in further detail in relation to Figure 4.

The mobile station 8, before a SIM 34 is inserted, is in an inoperative state, and cannot yet be used for obtaining a normal service in a mobile communications network. In step S1, the mobile station 8 checks whether a SIM 34 is inserted within the SIM slot of the mobile station 8. When a SIM 34 is inserted, the mobile station 8 begins by reading the standard data records from the GSM data records 42 and/or the UMTS data records 44, step S2. Once all of the appropriate data records have been read and transferred to the non-volatile memory 28 of the mobile station 8, the mobile station checks whether there is an activation agent 46 stored on the SIM 34, step S3. If no activation agent 46 is found in the SIM 34, the mobile station 8 proceeds by conducting standard procedures, including authentication with the mobile network, allowing the subscriber to obtain services from the mobile network.

If an activation agent 46 is found on the SIM 34 in step S3, the mobile station 8 reads the activation agent 46 from the SIM 34 in step S5 and activates the activation agent 46 in step S6 by installing and running the application. The activation agent 46 controls the mobile station 8 in relation to the one or more customising software applications 48, 50 stored on the SIM 34. The mobile station 8 reads the customising software applications 48, 50 and transfers these to a non-volatile memory 28 of the mobile station 8, step S7. Next, the customising software applications 48, 50 are each, in turn, activated, step S8, by installing the applications onto the mobile station 8. The subscriber may then in future run the application by selecting the application from a menu on the mobile station 8. The activation agent 46 may, in addition to activating the customising software applications 48, 50 by installing them on the mobile station 8, also initiate the running of the applications, thereby providing customization features which are available by running the applications immediately in response to insertion of the SIM 34 into the mobile station 8. Furthermore, the activation agent 46 may add a customising software application to a "start-up" list for the mobile station 8, such that, when the mobile station 8 is in future switched off and then switched back on again, the selected customising software applications 48, 50 are automatically run on start up.

After the customising software applications 48, 50 have been activated by the activation agent 46 in some manner, and providing the SIM 34 is not removed (which is otherwise detected in step S9) the mobile station 8 conducts standard procedures, step S10, including authentication of the mobile station 8 to the mobile communications network using the authentication function provided by the SIM 34, in order to provide the subscriber with access to services provided by the mobile communications network. If the SIM 34 is removed in step S9, the activation agent 46 detects this and, in response, operates in step S11 to deactivate the customising software applications 48, 50. Such deactivation is preferably conducted in a manner such that the applications are not removed from the memory of the mobile station 8 entirely; indeed preferably the entire applications remain held in the memory 28 whilst inactive. This feature is provided so that the customising software applications 48, 50 may be reactivated subsequently without retransferring entirely the customising software applications 48, 50 from the SIM 34.

In this embodiment, deactivation may comprise any of ending the running of the application on the mobile station 8, disabling the application, removing the application from the menu structure of the mobile station 8 and/or removing the application from the "start-up" list of the mobile station 8. Preferably, all of the above deactivation steps are carried out for each customising software application as appropriate.

Note that, when the SIM 34 is removed, according to standard procedures the mobile station 8 is no longer capable of obtaining network services, and according to the invention the mobile station 8 is also now no longer customized with the customising software applications 48, 50, because the customising software applications 48, 50 are no longer active within the mobile station 8.

Next, the mobile station 8 waits until the SIM 34 is reinserted in step S12. If the SIM 34 is reinserted, the activation agent 46 operates to reactivate the customising software applications 48, 50 within the mobile station 8, thereby providing the appropriate customization features in response to the reinsertion of the SIM 34 into the mobile station 8.

Note also that, if a different SIM is inserted, the customising software applications are not reactivated. If the new SIM includes a different activation agent, the previous activation agent is overwritten and the previous customising software applications are deleted.

The customising software applications 48, 50 may for example include a "home screen utility" application, a "back up utility" application, one or more game applications and/or an "update utility" application, although many other customising software applications are envisaged. The "home screen utility" application provides a home screen customisation function which customizes the home screen layout and functionality of the mobile station 8 to be unique to the mobile operator. The "back up utility" application provides a backup function which is used to regularly transmit data, such as contacts data and calendar data, stored by the subscriber on the mobile station 8 to a network side store such that, if the mobile station 8 is lost or stolen, the subscriber data is not lost and can be restored onto a new mobile station 8. The game application provides a game function for the amusement of the user. The "update utility" application includes a software update function to regularly check for updates to the customising software applications and/or other applications stored on the mobile station 8, over the air by querying an update application server in the network. The update utility application also includes a function to download and install entirely new applications over the air from an update application server in the network.

Each customising software application is in this embodiment written for a particular applications platform, suitable for the mobile station on which the application is to be installed. In preferred embodiments of the invention, the authentication module includes a separate activation agent, and a set of corresponding customising software applications, for each of a plurality of different applications platforms. The mobile station is preferably arranged to automatically select and install the correct activation agent for their respective applications platform in response to the insertion of the authentication module into the mobile station. The different applications platforms may include one or more of the Microsoft Windows Mobile^{™}, Microsoft Windows CE^{™}, Symbian^{™} and Linux^{™} operating systems and the Java^{™} and Brew^{™} applications platforms..

In further embodiments of the invention, each customising software application may store data, generated by the customising software application in use, on the SIM 34. This data may for example include user settings, historical data associated with an application (e.g. a last backup date for a backup utility, a high score setting for a game, an update counter), etc. This data is generated and stored on the SIM 34 by a customising software application, after the customising software application has been transferred to and installed on the mobile station and during use of the application. Then, when the SIM 34 is removed and ported to a different mobile station 8, the data stored by each customising software application is also ported with it, rather than being lost, along with the customising software application itself.

Note that, whilst in the above embodiments, the customising software applications are held in the mobile station after the SIM is removed, in an alternative embodiment the applications are removed automatically when the SIM is removed. However, this has the disadvantage that the applications must be transferred and installed afresh each time the SIM is removed. Indeed, whilst the applications are in the above embodiments stored in non-volatile memory on the mobile station after being transferred from the SIM, they may alternatively be stored in volatile memory. However, this has the disadvantage that they must be transferred and installed afresh each time the mobile station is switched off.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of customising a mobile station (8) in a mobile telecommunications system, **characterised by** the steps of:
transferring one or more customising software applications (48, 50) from a portable authentication module (34) onto said mobile station (8) in response to insertion of said authentication module (34) into said mobile station (8), said authentication module (34) comprising means for authenticating (42, 44) a subscriber in said mobile telecommunications system when said authentication module (34) is inserted in said mobile station (8), and said authentication module (34) further comprising said one or more software applications (48, 50) for customising said mobile station (8) and then activating said one or more customising software applications (48, 50) on said mobile station (8), in order to customise said mobile station (8); and
deactivating said one or more customising software applications (48, 50) on said mobile station (8) in response to removal of said authentication module (34) from said mobile station (8).

2. A method according to claim 1, wherein said deactivation is conducted without removing said one or more customising software applications (48, 50) from said mobile station (8), and wherein the method comprises, in response to reinsertion of said authentication module (34) into said mobile station (8), reactivating said one or more customising software applications (48, 50) without retransferring entirely said one or more customising software applications (48, 50) from said authentication module (34).

3. A method according to claim 1 or 2, comprising installing an activation agent software application (46) on said mobile station (8) in response to insertion of said authentication module (34) into said mobile station (8), said activation agent software application (46) controlling said mobile station (8) in relation to said one or more customising software applications (48, 50).

4. A method according to claim 3, wherein said activation agent software application (46) is stored in said portable authentication module (34).

5. A method according to claim 3 or 4, wherein said activation agent software application (46) initiates the transfer of said one or more customising software applications (48, 50) to said mobile station (8).

6. A method according to any of claims 4, 5 or 6, wherein said activation agent software application (46) controls the deactivation of said one or more customising software applications (48, 50) in response to removal of said authentication module (34) from said mobile station (8).

7. A mobile station for use in a mobile telecommunications system, said mobile station comprising
- means for transferring one or more software applications from an authentication module according to claim 13 to said mobile station in response to insertion of said authentication module into said mobile station,
- means for activating said one or more software applications, in order to customise said mobile station and
- means for deactivating said one or more customising software applications on said mobile station in response to removal of said authentication module from said mobile station.

8. A mobile station (8) according to claim 7, wherein said mobile station (8), when customised, is adapted to:
deactivate said one or more customising stored code means (48, 50) without removing said one or more customising stored code means (48, 50) from said mobile station (8); and
in response to reinsertion of said authentication module (34) into said mobile station (8), reactivate said one or more customising stored code means (48, 50) without retransferring entirely said one or more customising stored code means (48, 50) from said authentication module (34).

9. A portable authentication module (34) for insertion into a mobile station (8) according to claim 7 or 8 for use in a mobile telecommunications system, said authentication module (34) comprising:
means for authenticating (42, 44) a subscriber in said mobile telecommunications system when said authentication module (34) is inserted in said mobile station (8);
one or more customising stored code means (48, 50) for customising said mobile station (8), **characterised in that**:
said authentication module comprises activation agent stored code means (46) which are adapted to be transferred to said mobile station (8) in response to insertion of said authentication module (34) into said mobile station (8), said activation agent stored code means (46) being adapted to control said mobile station (8) in relation to said one or more customising stored code means (48, 50);
said one or more customizing stored code means (48, 50) are adapted to be transferred to said mobile station (8) in response to insertion of said authentication module (34) into said mobile station (8), and then activated thereon, in order to customise said mobile station (8) and
said activation agent stored code means (46) are adapted to deactivate said one or more customising stored code means (48, 50) on said mobile station (8) in response to removal of said authentication module (34) from said mobile station (8).

10. A portable authentication module (34) according to claim 13, wherein said activation agent stored code means (46) are adapted to:
deactivate said one or more customising stored code means (48, 50) without removing said one or more customising stored code means (48, 50) from said mobile station (8); and
in response to reinsertion of said authentication module (34) into said mobile station (8), reactivate said one or more customising stored code means (48, 50) without retransferring entirely said one or more customising stored code means (48, 50) from said authentication module (34).

11. A computer program comprising program code means for performing all the steps of any one of the claims 1 to 6 when said program is run on a data processor.

12. A computer program product comprising program code means stored on a computer readable medium for performing the method of any one of the claims 1 to 6 when said program is run on a data processor.

## Patentansprüche

1. Verfahren zum Anpassen einer Mobilstation (8) in einem Mobiltelekommunikationssystem, **gekennzeichnet durch** die folgenden Schritte:
Übertragen wenigstens einer Anpassungs-Softwareanwendung (48, 50) von einem portierbaren Authentifizierungsmodul (34) auf die genannte Mobilstation (8) als Reaktion auf das Einsetzen des genannten Authentifizierungsmoduls (34) in die genannte Mobilstation (8), wobei das genannte Authentifizierungsmodul (34) Mittel zum Authentifizieren (42, 44) eines Teilnehmers in dem genannten Mobiltelekommunikationssystem, wenn das genannte Authentifizierungsmodul (34) in die genannte Mobilstation (8) eingesetzt wird, umfasst und das genannte Authentifizierungsmodul (34) ferner wenigstens eine Softwareanwendung (48, 50) zum Anpassen der genannten Mobilstation (8) umfasst und dann Aktivieren der genannten wenigstens einen Anpassungs-Softwareanwendung (48, 50) an der genannten Mobilstation (8), um die genannte Mobilstation (8) anzupassen; und
Deaktivieren der genannten wenigstens einen Anpassungs-Softwareanwendung (48, 50) an der genannten Mobilstation (8) als Reaktion auf das Entfernen des genannten Authentifizierungsmoduls (34) aus der genannten Mobilstation (8).

2. Verfahren nach Anspruch 1, bei dem das genannte Deaktivieren ohne Entfernen der genannten wenigstens einen Anpassungs-Softwareanwendung (48, 50) aus der genannten Mobilstation (8) durchgeführt wird und bei dem das Verfahren das Neuaktivieren der genannten wenigstens einen Anpassungs-Softwareanwendung, ohne die genannte wenigstens eine Anpassungs-Softwareanwendung (48, 50) erneut vollständig aus dem genannten Authentifizierungsmodul (34) zu übertragen, als Reaktion auf das Wiedereinsetzen des genannten Authentifizierungsmoduls (34) in die genannte Mobilstation (8) umfasst.

3. Verfahren nach Anspruch 1 oder 2, umfassend das Installieren einer Aktivierungsagent-Softwareanwendung (46) in der genannten Mobilstation (8) als Reaktion auf das Einsetzen des genannten Authentifizierungsmoduls (34) in die genannte Mobilstation (8), wobei die genannte Aktivierungsagent-Softwareanwendung (46) die genannte Mobilstation (8) in Bezug auf die genannte wenigstens eine Anpassungs-Softwareanwendung (48, 50) steuert.

4. Verfahren nach Anspruch 3, bei dem die genannte Aktivierungsagent-Softwareanwendung (46) in dem genannten portierbaren Authentifizierungsmodul (34) gespeichert wird.

5. Verfahren nach Anspruch 3 oder 4, bei dem die genannte Aktivierungsagent-Softwareanwendung (46) die Übertragung der genannten wenigstens einen Anpassungs-Softwareanwendung (48, 50) auf die genannte Mobilstation (8) einleitet.

6. Verfahren nach einem der Ansprüche 3, 4 oder 5, bei dem die genannte Aktivierungsagent-Softwareanwendung (46) die Deaktivierung der genannten wenigstens einen Anpassungs-Softwareanwendung (48, 50) als Reaktion auf das Entfernen des genannten Authentifierungsmoduls (34) aus der genannten Mobilstation (8) steuert.

7. Mobilstation zur Verwendung in einem Mobiltelekommunikationssystem, wobei die genannte portierbare Mobilstation Folgendes umfasst:
Mittel zum Übertragen wenigstens einer Softwareanwendung von einem Authentifizierungsmodul nach Anspruch 13 auf die genannte Mobilstation als Reaktion auf das Einsetzen des genannten Authentifizierungsmoduls in die genannte Mobilstation,
Mittel zum Aktivieren der genannten wenigstens einen Softwareanwendung, um die genannte Mobilstation anzupassen und
Mittel zum Deaktivieren der genannten wenigstens einen Anpassungs-Softwareanwendung an der genannten Mobilstation als Reaktion auf das Entfernen des genannten Authentifizierungsmoduls aus der genannten Mobilstation.

8. Mobilstation (8) nach Anspruch 7, wobei die genannte Mobilstation (8), wenn angepasst, ausgeführt ist, um
das genannte wenigstens eine gespeicherte Anpassungs-Codemittel (48, 50) zu deaktivieren, ohne das genannte wenigstens eine gespeicherte Anpassungs-Codemittel (48, 50) aus der genannten Mobilstation (8) zu entfernen; und
das genannte wenigstens eine gespeicherte Anpassungs-Codemittel (48, 50) als Reaktion auf das Wiedereinsetzen des genannten Authentifizierungsmoduls (34) in die genannte Mobilstation (8) neu zu aktivieren, ohne das genannte wenigstens eine gespeicherte Anpassungs-Codemittel (48, 50) erneut vollständig aus dem genannten Authentifizierungsmodul (34) zu übertragen.

9. Portierbares Authentifizierungsmodul (34) zum Einsetzen in eine Mobilstation (8) nach Anspruch 7 oder 8 zur Verwendung in einem Mobiltelekommunikationssystem, wobei das genannte Authentifizierungsmodul (34) Folgendes umfasst:
Mittel zum Authentifizieren (42, 44) eines Teilnehmers in dem genannten Mobiltelekommunikationssystem, wenn das genannte Authentifizierungsmodul (34) in die genannte Mobilstation (8) eingesetzt wird;
wenigstens ein gespeichertes Anpassungs-Codemittel (48, 50) zum Anpassen der genannten Mobilstation (8), **dadurch gekennzeichnet, dass**
das genannte Authentifizierungsmodul (34) gespeicherte Aktivierungsagent-Codemittel (46) umfasst, die zum Übertragen auf die genannte Mobilstation (8) als Reaktion auf das Einsetzen des genannten Authentifizierungsmoduls (34) in die genannte Mobilstation (8) ausgeführt sind, wobei die genannten gespeicherten Aktivierungsagent-Codemittel (46) zum Steuern der genannten Mobilstation (8) in Bezug auf das genannte wenigstens eine gespeicherte Anpassungs-Codemittel (48, 50) ausgeführt sind;
das genannte wenigstens eine gespeicherte Anpassungs-Codemittel (48, 50) zum Übertragen auf die genannte Mobilstation (8) als Reaktion auf das Einsetzen des genannten Authentifizierungsmoduls (34) in die genannte Mobilstation (8) und dann Aktivieren an dieser ausgeführt ist, um die genannte Mobilstation (8) anzupassen, und
die gespeicherten Aktivierungsagent-Codemittel (46) zum Deaktivieren des genannten wenigstens einen gespeicherten Anpassungs-Codemittels (48, 50) an der genannten Mobilstation (8) als Reaktion auf das Entfernen des genannten Authentifizierungsmoduls (34) aus der genannten Mobilstation (8) ausgeführt sind.

10. Portierbares Authentifizierungsmodul (34) nach Anspruch 9, bei dem die genannten gespeicherten Aktivierungsagent-Codemittel (46) ausgeführt sind, um
das genannte wenigstens eine gespeicherte Anpassungs-Codemittel (48, 50) zu deaktivieren, ohne das genannte wenigstens eine gespeicherte Anpassungs-Codemittel (48, 50) aus der genannten Mobilstation (8) zu entfernen; und
das genannte wenigstens eine gespeicherte Anpassungs-Codemittel (48, 50) als Reaktion auf das Wiedereinsetzen des genannten Authentifizierungsmoduls (34) in die genannte Mobilstation (8) neu zu aktivieren, ohne das genannte wenigstens eine gespeicherte Anpassungs-Codemittel (48, 50) erneut vollständig aus dem genannten Authentifizierungsmodul (34) zu übertragen.

11. Computerprogramm mit Programmcode-mitteln um alle Schritte von jedem beliebigen der Ansprüche 1 bis 6 durchzuführen, wenn das Programm auf einem Datenprozessor ausgeführt wird.

12. Computerprogrammprodukt mit Programmcode-mitteln, die auf einem computerlesbaren Datenträger gespeichert sind um das Verfahren nach jedem beliebigen der Ansprüche 1 bis 6 durchzuführen, wenn das Programm auf einem Datenprozessor ausgeführt wird.

## Revendications

1. Procédé de personnalisation d'une station mobile (8) dans un système de télécommunication mobile, procédé **caractérisé par** les étapes consistant à :
transférer une ou plusieurs applications logicielles de personnalisation (48, 50) en provenance d'un module d'authentification portable (34) sur ladite station mobile (8) en réaction à l'insertion dudit module d'authentification (34) dans ladite station mobile (8), ledit module d'authentification (34) comportant des moyens d'authentification (42, 44) d'un abonné dans ledit système de télécommunication mobile quand ledit module d'authentification (34) est inséré dans ladite station mobile (8), et ledit module d'authentification (34) comportant par ailleurs une ou plusieurs applications logicielles (48, 50) servant à personnaliser ladite station mobile (8) puis activer lesdites une ou plusieurs applications logicielles de personnalisation (48, 50) sur ladite station mobile (8), en vue de personnaliser ladite station mobile (8) ; et
désactiver lesdites une ou plusieurs applications logicielles de personnalisation (48, 50) sur ladite station mobile (8) en réaction au retrait dudit module d'authentification (34) en provenance de ladite station mobile (8).

2. Procédé selon la revendication 1, dans lequel ladite désactivation est réalisée sans retirer lesdites une ou plusieurs applications logicielles de personnalisation (48, 50) en provenance de ladite station mobile (8), et dans lequel le procédé comporte, en réaction à la réinsertion dudit module d'authentification (34) dans ladite station mobile (8), la réactivation desdites une ou plusieurs applications logicielles de personnalisation (48, 50) sans retransférer entièrement lesdites une ou plusieurs applications logicielles de personnalisation (48, 50) en provenance dudit module d'authentification (34).

3. Procédé selon la revendication 1 ou la revendication 2, comportant l'installation d'une application logicielle d'agent d'activation (46) sur ladite station mobile (8) en réaction à l'insertion dudit module d'authentification (34) dans ladite station mobile (8), ladite application logicielle d'agent d'activation (46) gérant ladite station mobile (8) par rapport auxdites une ou plusieurs applications logicielles de personnalisation (48, 50).

4. Procédé selon la revendication 3, dans lequel ladite application logicielle d'agent d'activation (46) est enregistrée dans ledit module d'authentification portable (34).

5. Procédé selon la revendication 3 ou la revendication 4, dans lequel ladite application logicielle d'agent d'activation (46) lance le transfert desdites une ou plusieurs applications logicielles de personnalisation (48, 50) sur ladite station mobile (8).

6. Procédé selon l'une quelconque des revendications 3, 4 ou 5, dans lequel ladite application logicielle d'agent d'activation (46) gère la désactivation desdites une ou plusieurs applications logicielles de personnalisation (48, 50) en réaction au retrait dudit module d'authentification (34) en provenance de ladite station mobile (8).

7. Station mobile adapté à des fins d'utilisation dans un système de télécommunication mobile, ledit station mobile comportant :
des moyens pour transférer une ou plusieurs applications logicielles en provenance d'un module d'authentification selon la revendication 13 sur ladite station mobile en réaction à l'insertion dudit module d'authentification dans ladite station mobile,
des moyens pour désactiver lesdites une ou plusieurs applications logicielles de personnalisation en vue de personnaliser ladite station mobile, et
des moyens pour désactiver lesdites une ou plusieurs applications logicielles de personnalisation sur ladite station mobile en réaction au retrait dudit module d'authentification (34) en provenance de ladite station mobile (8).

8. Station mobile (8) selon la revendication 7, dans laquelle ladite station mobile (8), quand elle est personnalisée, est adaptée pour :
désactiver lesdits un ou plusieurs moyens de type codes enregistrés de personnalisation (48, 50) sans retirer lesdits un ou plusieurs moyens de type codes enregistrés de personnalisation (48, 50) en provenance de ladite station mobile (8) ; et
en réaction à la réinsertion dudit module d'authentification (34) dans ladite station mobile (8), réactiver lesdits un ou plusieurs moyens de type codes enregistrés de personnalisation (48, 50) sans retransférer entièrement lesdits un ou plusieurs moyens de type codes enregistrés de personnalisation (48, 50) en provenance dudit module d'authentification (34).

9. Module d'authentification portable (34) à des fins d'insertion dans une station mobile (8) selon la revendication 7 ou 8 adapté à des fins d'utilisation dans un système de télécommunication mobile, ledit module d'authentification (34) comportant :
des moyens d'authentification (42, 44) d'un abonné dans ledit système de télécommunication mobile quand ledit module d'authentification (34) est inséré dans ladite station mobile (8) ;
un ou plusieurs moyens de type codes enregistrés de personnalisation (48, 50) servant à personnaliser ladite station mobile (8), module d'authentification portable **caractérisé en ce que** :
ledit module d'authentification comporte des moyens de type codes enregistrés d'agent d'activation (46) qui sont adaptés pour être transférés sur ladite station mobile (8) en réaction à l'insertion dudit module d'authentification (34) dans ladite station mobile (8), lesdits moyens de type codes enregistrés d'agent d'activation (46) étant adaptés pour gérer ladite station mobile (8) par rapport auxdits un ou plusieurs moyens de type codes enregistrés de personnalisation (48, 50) ;
lesdits un ou plusieurs moyens de type codes enregistrés de personnalisation (48, 50) sont adaptés pour être transférés sur ladite station mobile (8) en réaction à l'insertion dudit module d'authentification (34) dans ladite station mobile (8), puis activés sur celle-ci, en vue de personnaliser ladite station mobile (8) et
lesdits moyens de type codes enregistrés d'agent d'activation (46) sont adaptés pour désactiver lesdits un ou plusieurs moyens de type codes enregistrés de personnalisation (48, 50) sur ladite station mobile (8) en réaction au retrait dudit module d'authentification (34) en provenance de ladite station mobile (8).

10. Module d'authentification portable (34) selon la revendication 9, dans lequel lesdits moyens de type codes enregistrés d'agent d'activation (46) sont adaptés pour :
désactiver lesdits un ou plusieurs moyens de type codes enregistrés de personnalisation (48, 50) sans retirer lesdits un ou plusieurs moyens de type codes enregistrés de personnalisation (48, 50) en provenance de ladite station mobile (8) ; et
en réaction à la réinsertion dudit module d'authentification (34) dans ladite station mobile (8), réactiver lesdits un ou plusieurs moyens de type codes enregistrés de personnalisation (48, 50) sans retransférer entièrement lesdits un ou plusieurs moyens de type codes enregistrés de personnalisation (48, 50) en provenance dudit module d'authentification (34).

11. Un programme d'ordinateur, comprenant de code de programme pour effectuer la totalité des étapes selon l'une quelconque des revendications 1 à 6, lorsque ledit programme fonctionne sur un processeur de données.

12. Un produit de programme d'ordinateur, comprenant des moyens de code de programme, stockés sur un milieu lisible par un ordinateur pour effectuer la totalité des étapes selon l'une quelconque des revendications 1 à 6, lorsque ledit programme fonctionne sur un processeur de données.
